# DEMANDE DE BREVET EUROPEEN

(11) **EP 2 073 401 A2**
(43) Date de publication de la demande: **24.06.2009**
(21) Numéro de dépôt: 08172144.1
(22) Date de dépôt: 18.12.2008
(51) Int. Cl.: H04B 7/185

(54) **Réseau hybride terrestre-satellitaire de télécommunications à stations-relais terrestres adaptables**

(30) Priorité: 21.12.2007 FR 0709062
(71) Demandeur: Commissariat à l'Energie Atomique, 75015 Paris (FR)
(72) Inventeur: Calvanese Stratini, Emilio, 38000, GRENOBLE (FR); Des Noes, Mathieu, 38000, GRENOBLE (FR); Cassiau, Nicolas, 38960, SAINT ETIENNE DE CROSSEY (FR)
(74) Mandataire: Bréda, Jean-Marc

(57) **Abrégé**

Le domaine général de l'invention est celui des réseaux de télécommunication hybrides (N) comprenant au moins un satellite-relais de télécommunication (S) émettant au moins un signal couvrant une zone géographique donnée organisée en sous-zones de plus faible dimension, une station-relais terrestre (R) apte à recevoir, à traiter le signal satellitaire et à émettre un signal dans au moins une des sous-zones et des terminaux de réception mobiles (T). Le réseau selon l'invention comporte des premiers moyens permettant de réaliser une cartographie de la qualité de réception du signal satellitaire dans chaque sous-zone ; des seconds moyens permettant de transmettre les informations de cartographie à la station-relais terrestre. La station-relais comporte des troisièmes moyens permettant, en fonction des informations de cartographie de réception d'émettre un signal fonction de ladite cartographie permettant d'améliorer la qualité de réception dans sa sous-zone de réception.

## Description

Le domaine de l'invention est celui des réseaux hybrides terrestre-satellitaires comportant des station-relais terrestres de retransmission.

Pour accompagner la demande croissante de télécommunications à couverture géographique globale, en particulier à destination de terminaux mobiles comme les téléphones portables, les réseaux comportent des satellites qui jouent un rôle de plus en plus important dans les nouvelles infrastructures globales de télécommunication. Ainsi, des normes de standardisation telle que celle de la troisième génération de téléphonie mobile encore appelée « 3GPP », signifiant « 3rd Generation Partnership Project » ou la norme « DVB-H », acronyme de « Digital Video Broadcasting - Handheld » signifiant en français « Diffusion vidéo numérique pour portable » définissent des réseaux de communication incluant des satellites. A titre d'exemple, la norme Satellite-UMTS, signifiant « Universal Mobile Telecommunications System » fût la première norme technique approuvée par l' »ETSI » (European Telecommunications Standards Institute) à la fin de l'année 2000.

Le développement de plus en plus important de la part des satellites dans les systèmes de télécommunications terrestres entraîne de nouveaux problèmes dans la structuration et la configuration des réseaux. En effet, un satellite couvre un certain nombre d'aires géographiques de réceptions appelées « cellules ». En fonction des différents scénarios de retransmission, il existe des zones de couvertures inadaptées où une cellule ou un espace entre deux cellules ne peut pas être couvert par les cellules voisines. De tels phénomènes sont dus typiquement aux perturbations liées au relief géographique, aux bâtiments de grande taille où à de mauvaises conditions météorologiques.
Ces zones de couvertures inadaptées peuvent détériorer la qualité du signal reçu par le terminal de l'abonné et également diminuer la capacité du réseau à gérer et à éviter les coupures. Ainsi, dans les zones géographiques où la couverture du réseau est faible, le service peut ainsi ne plus satisfaire l'utilisateur.

Pour les systèmes de communications terrestres, plusieurs solutions ont été proposées pour pallier ces inconvénients. On citera, sur ce sujet, les brevets US 09 186 886 intitulé « Poor network coverage mapping » de la société Ericsson et US 6 799 016 intitulé « Method for mapping poor coverage networks » de la société Motorola.

Afin de surmonter les mauvaises conditions de retransmission, il a été également proposé d'exploiter diverses techniques pour améliorer la couverture d'un réseau de satellites. Compte-tenu de leur très large bande passante, les canaux des satellites n'offrent pas la grande diversité de fréquences qui est habituellement mise à profit dans les systèmes terrestres de type « WCDMA », acronyme de « Wideband Code Division Multiple Access », signifiant « *Multiplexage par code large bande* », système basé sur la technologie utilisée pour la téléphonie mobile de troisième génération et qui met en oeuvre des terminaux de type « RAKE ». Toutefois, d'autres techniques ont été investiguées. On citera sur ces sujets les publications de R. Tesi, L. Mucchi, Dj. Tujkovic et E. Kunnari intitulée « Transmit diversity of Multi-satellite UMTS », international Symposium on 3^{rd} Generation Infrastructure and Services 3GIS'01, Athens, Grece, July 2001 et de Thomas E. Sharon et al, 2004 intitulée « Multi-beam satellite communications system ».

D'autres projets ont pour finalité la mise en place de réseaux hybrides comportant des stations relais au sol. A titre d'exemple de réseaux hybrides comportant à la fois des satellites et des réseaux terrestres pour la distribution de services de télévision et de télécommunication, le projet européen baptisé « IST MAESTRO » (IST signifiant « Information Society Technology ») a pour but de définir, de développer et de mettre en place un nouveau système appelé « SDMB », acronyme de « Satellite Digital Multimedia Broadcast » utilisant le standard « UMTS ». Le système « SDMB » est destiné à compléter le réseau mobile terrestre « UMTS » avec des capacités accrues de distribution de services multimédia, de canaux de télévision ou de télécommunication vers des systèmes mobiles, sans introduire de contraintes fortes sur le terminal de l'utilisateur ou de l'abonné. Cette architecture hybride représente actuellement le meilleur compromis technologique pour les réseaux mettant en oeuvre à la fois une couverture satellite et des relais terrestre dits « point à point ». Pour fournir des capacités de service à bas débit protégé des perturbations du relief, l'architecture MAESTRO prévoit une liaison bidirectionnelle améliorée avec le satellite.
En conclusion, l'objectif du projet MAESTRO est de tirer avantage des systèmes de satellites et de s'assurer que le système envisagé « SDMB » soit pleinement interopérationnel avec les standards terrestres « UMTS » afin d'encourager en Europe l'adoption du multimédia et de contribuer au succès du déploiement du standard dit « 3G ».

Les canaux des systèmes de télécommunications mobiles peuvent présenter du « fading », c'est-à-dire un affaiblissement momentané du signal reçu. Aussi, un protocole appelé « CSI », signifiant « Channel State Information » concernant la qualité du lien source-destinataire devrait être adopté afin d'adapter dynamiquement les paramètres de transmission au contexte des variations temporelles de transmission. Les réseaux classiques sans fil utilisent un canal de rétroaction, connu sous le nom de « feedback » pour envoyer ce type d'informations à l'expéditeur. Toutefois, un satellite a comme caractéristique de diffuser de l'information à un très grand nombre d'utilisateurs, aussi de tels « feedback » ne sont pas aisés à collecter. De plus, il n'est pas simple de s'assurer que de tels signaux de retour sont exempts d'erreurs et tout signal de retour est sujet à des délais de transmission vers la source importants.

Dans les réseaux terrestres à topologie fixe, une approche dite « heuristique » pour limiter l'utilisation des signaux de feedback est de faire une analyse géométrique ou géographique du réseau et de déterminer les zones où diverses techniques peuvent suppléer aux mauvaises conditions de réception. Par exemple, la publication de E. Yazdan et M.R. Pakravan intitulée « Adaptive Modulation Techniques for Cooperative Diversity in Wireless Fading Channels », publiée dans « IEEE International Symposium on Personal, Indoor, and Mobile Radio Communications, septembre 2006 » décrit l'amélioration de performances comme une fonction de coopération de la localisation des utilisateurs pour identifier les zones où la coopération avec les réseaux de stations relais au sol devient utile. Toutefois, ce modèle de réseau à topologie donnée ne peut s'appliquer simplement à un réseau de terminaux mobiles sans fil (ou « wireless »).

Actuellement, dans un système de télécommunications comprenant un certain nombre de satellites de communication, un nombre de stations relais au sol et un certain nombre de terminaux fixes ou mobiles, il existe des zones couvertes par le satellite où la réception par le terminal de l'utilisateur est mauvaise, d'autres où elle est plus ou moins perturbée et d'autres enfin où elle est satisfaisante. Différents degrés dans la qualité de réception du signal peuvent ainsi être définis. La qualité du signal n'est donc pas fixe quand le mobile se déplace et dépend des données géographiques, morphologiques et locales. En plus des perturbations momentanées du système dues aux interférences, de mauvaises conditions météorologiques peuvent causer des variations de la qualité du signal. Par exemple, la pluie peut causer une atténuation comprise entre 8 dB et 10 dB pour les fréquences de retransmission comprises entre 12 GHz et 14 GHz. On citera, à ce propos, les études de G. Maral et M. Bousquet intitulée « Satellite Communication Systems » parue chez John Wiley and Sons, 2nd edition 1993 et de J.J. Spilker intitulé « Digital Communication by Satellite » parue chez Prentice-Hall, 1977.

Il est donc nécessaire que le système possède la capacité de différentier le service offert aux terminaux. Le dispositif selon l'invention prévoit une ou plusieurs station-relais terrestres adaptables ou « intelligentes » pouvant imposer le signal terrestre en sélectionnant de façon dynamique les sous-aires de la couverture satellitaire.

Plus précisément, l'invention a pour objet un réseau de télécommunication hybride comprenant au moins un satellite-relais de télécommunication émettant au moins un signal couvrant une zone géographique donnée organisée en sous-zones de plus faible dimension, une station-relais terrestre apte à recevoir, à traiter le signal satellitaire et à émettre un signal dans au moins une des sous-zones et des terminaux de réception mobiles, **caractérisé en ce que :**
- Le réseau comporte des premiers moyens permettant de réaliser une cartographie de la qualité de réception du signal satellitaire dans chaque sous-zone ;
- Le réseau comporte des seconds moyens permettant de transmettre les informations de cartographie à la station-relais terrestre ;
- La station-relais comporte des troisièmes moyens permettant, en fonction des informations de cartographie de réception d'émettre un signal fonction de ladite cartographie permettant d'améliorer la qualité de réception dans sa sous-zone de réception.
   Avantageusement, les informations de cartographique sont de deux types, des informations de qualité de réception dues à la topographie des sous-zones et des informations de qualité de réception dues aux conditions météorologiques.
   De plus, la qualité de réception dans chaque sous-zone peut comporter au moins trois niveaux distincts :

- Premier niveau : réception satellitaire correcte des terminaux de réception ;
- Second niveau : réception satellitaire partielle ou fluctuante des terminaux de réception ;
- Troisième niveau : réception satellitaire incorrecte des terminaux de réception.
   Avantageusement, le réseau peut comporter des quatrièmes moyens de contrôle du signal d'émission de la station-relais terrestre et des cinquièmes moyens permettant de recevoir des informations des terminaux de réception mobiles.
   Avantageusement, les informations reçues des terminaux concernent la qualité de réception par lesdits terminaux.
   De plus, le signal émis par la station peut être un signal d'interférence destructeur du signal satellitaire ou un signal d'interférence bruité pour éviter la réception correcte dans certaines sous-zones interdites.

Enfin, l'emplacement de la station-relais terrestre peut être déterminé en fonction de la cartographie de la qualité de réception du signal satellitaire, l'emplacement pouvant être définitif ou temporaire.

L'invention sera mieux comprise et d'autres avantages apparaîtront à la lecture de la description qui va suivre donnée à titre non limitatif et grâce aux figures annexées parmi lesquelles :
La figure 1 représente une vue globale du réseau selon l'invention ;

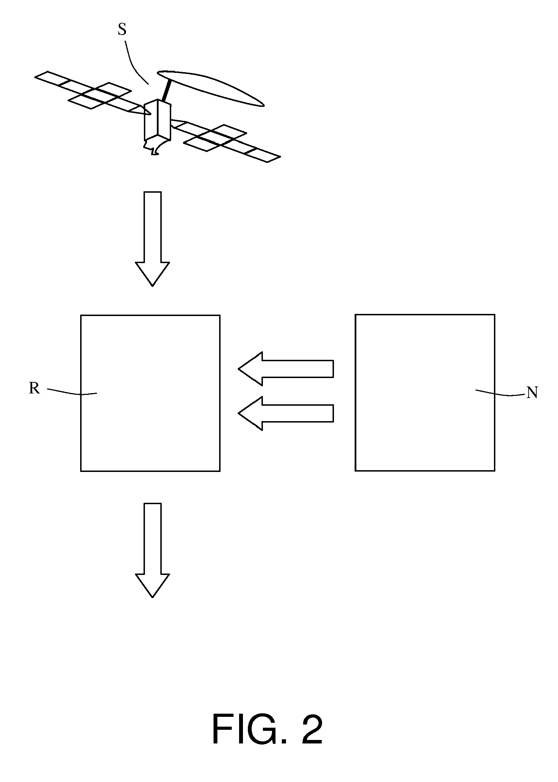

Les figures 2, 3 et 4 représentent trois modes de fonctionnement de la station-relais selon l'invention.

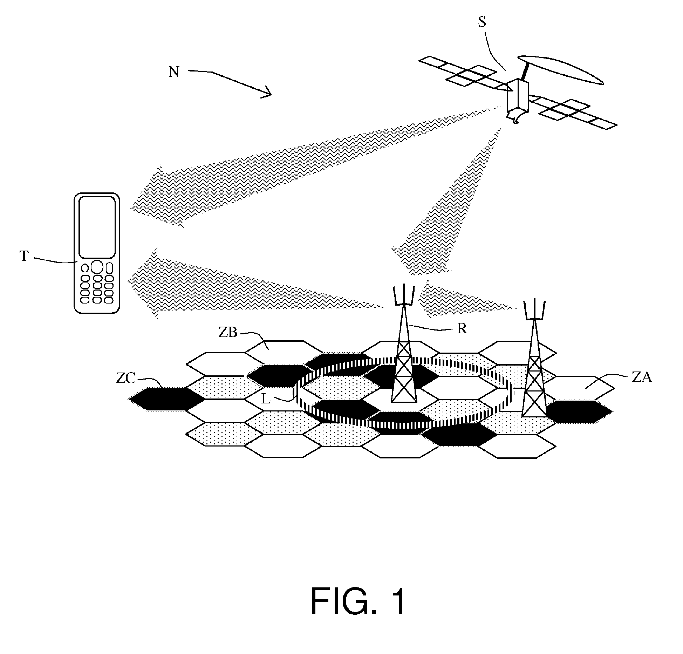

La figure 1 représente une vue globale du réseau N selon l'invention. Il comprend essentiellement :
- un satellite-relais de télécommunication S émettant au moins un signal couvrant une zone géographique donnée organisée en sous-zones de plus faible dimension formant une grille,
- au moins une station-relais R terrestre apte à recevoir et à traiter le signal satellitaire et
- des terminaux de réception mobiles T.
   Les différents signaux émis et reçus sont représentés par des flèches comportant un motif en ondulations sur la figure 1.

Sur la figure 1, les sous-zones Z couvertes par le satellite sont représentées, à titre d'exemple, par des hexagones. Bien entendu, elles pourraient être de forme différente. Compte-tenu des performances des stations-relais, le canal entre le satellite et la station relais est toujours satisfaisante ou libre d'erreurs. Par contre, comme il a été dit, la réception par un terminal mobile, dont les moyens de réception sont bien moins performants, que ceux d'une station-relais peut ne pas être satisfaisante. La qualité de retransmission varie en fonction de la position du terminal sur la grille et/ou des variations temporelles de retransmission qui peuvent dépendre, par exemple, des conditions météorologiques.

Ainsi, vu des terminaux, le signal satellitaire n'est pas de même qualité dans ces différentes zones. A titre d'exemple, sur la figure 1, on a distingué trois types de zones qui sont :
- Type ZA (en blanc) : signal satellite bon vers les mobiles,
- Type ZB (en pointillés): signal satellite moyen avec possibilité d'erreurs de transmission pour les mobiles,
- Type ZC (en noir) : mauvais signal satellite.

La mesure de la qualité de réception dans chaque zone ne pose pas de problèmes techniques particuliers. Le réseau comporte alors des moyens permettant de réaliser une cartographie dynamique de la qualité de réception du signal satellitaire dans chaque sous-zone. Cette cartographie peut être réalisée en deux dimensions ou en trois dimensions.
Il est à noter que l'emplacement des stations-relais constituant un réseau terrestre ou le choix de l'emplacement d'une nouvelle station-relais peut être déterminé en fonction de cette cartographie de qualité de réception.

L'ellipse en traits pointillés de la figure 1 représente la limite L de la couverture assurée par la station relais qui est plus petite que celle du satellite. Par exemple, la couverture de la station relais peut couvrir uniquement une ou quelques zones. Cette couverture dépend du diagramme de rayonnement des antennes du relais et de la puissance émise.
Le réseau comporte des moyens permettant de transmettre les informations de cartographie à la station-relais terrestre. La station-relais comporte alors des moyens permettant, en fonction des informations de cartographie de réception d'émettre un signal fonction de ladite cartographie de façon que les terminaux situés dans les zones où la retransmission est mauvaise ou nulle puissent quand même recevoir des informations correctes. A cette fin, les moyens d'amélioration peuvent être :
- Des moyens de différentier l'information de télécommunications par le relais d'informations locales,
- Des moyens d'améliorer la qualité du signal du terminal en adaptant la transmission du relais ou en réalisant des coopérations entre station-relais.

Le signal émis par la station-relais peut aussi être utilisé pour identifier les zones de couverture où la réception n'est pas souhaitée ou permise. Il est alors possible d'envoyer dans de telles zones un signal d'interférence destructeur et ou un signal d'interférence bruité pour éviter une réception correcte du satellite.

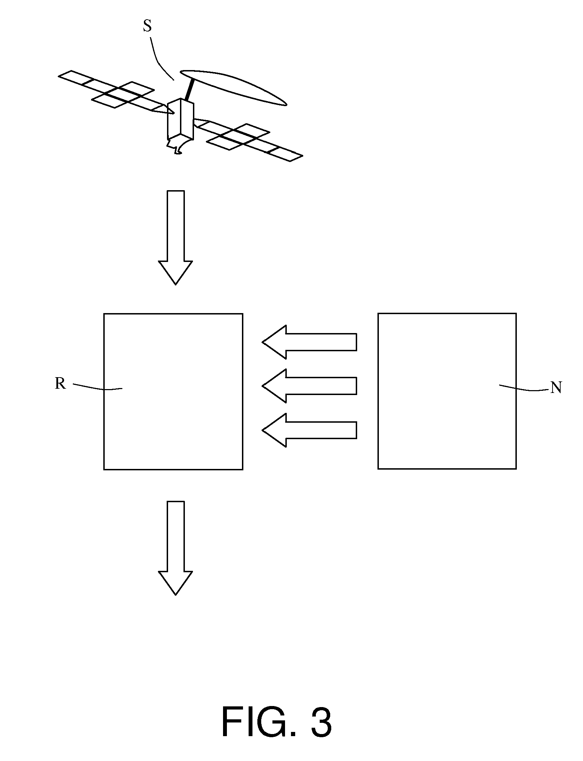

Les figures 3, 4 et 5 présentent trois modes de fonctionnement de station-relais au sol « intelligentes » selon l'invention.
Sur ces différentes figures, les différentes liaisons de communication sont représentées par des flèches blanches.
Sur la figure 3, la station-relais reçoit des informations :
- Du satellite. La station-relais est agencée de façon que les conditions de réception satellitaire soient toujours bonnes, y compris par mauvaises conditions météorologiques ;
- Du réseau. Ces informations sont essentiellement la cartographie dynamique de la qualité de réception du signal satellitaire dans chaque sous-zone, celle-ci peut comporter une partie invariable dans le temps, par exemple lorsque la mauvaise qualité de réception dépend du relief et une partie variable dans le temps, par exemple lorsque la mauvaise qualité de réception dépend des conditions météorologiques.
   La station-relais émet alors des informations à destination des terminaux mobiles.

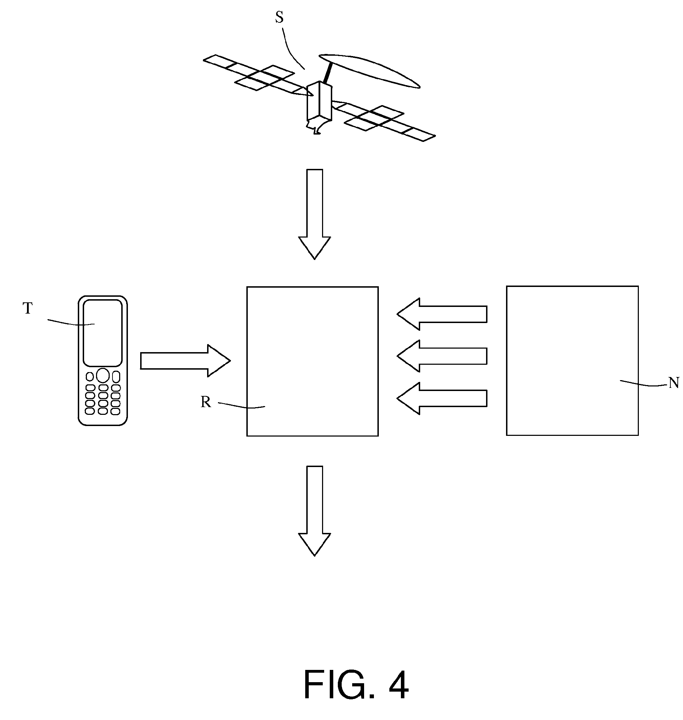

Sur la figure 4, la station-relais reçoit de plus un signal de contrôle provenant du réseau ; ce signal peut-être un signal indiquant à la station-relais les zones à couvrir ou sa couverture actuelle. Ce signal peut également être un signal de mise en route ou d'arrêt de la station-relais dans le cas où elle n'est pas destinée à être continuellement opérationnelle.

Sur la figure 5, la station-relais reçoit également des informations venant des terminaux. Ces informations sont, par exemple, une information de retour sur la qualité de réception (information de satisfaction ou d'insatisfaction) ou la couverture actuelle de la station.

Le réseau de communications selon l'invention peut être principalement appliqué aux systèmes mobiles de troisième génération comme le « 3GPP », la diffusion « DVB » signifiant « Digital Video Broadcast » et à tout réseau de satellites de télécommunication arrangé selon un motif permettant de définir une pluralité de cellules ayant des zones de recouvrement et qui proposent un support aux communications radio dans une région géographique donnée.

## Revendications

1. Réseau de télécommunication hybride (N) comprenant au moins un satellite-relais de télécommunication (S) émettant au moins un signal couvrant une zone géographique donnée organisée en sous-zones (ZA, ZB, ZC) de plus faible dimension, une station-relais (R) terrestre apte à recevoir, à traiter le signal satellitaire et à émettre un signal dans au moins une des sous-zones et des terminaux de réception mobiles (T), **caractérisé en ce que :**
• Le réseau comporte des premiers moyens permettant de réaliser une cartographie de la qualité de réception du signal satellitaire dans chaque sous-zone ;
• Le réseau comporte des seconds moyens permettant de transmettre les informations de cartographie à la station-relais terrestre ;
• La station-relais comporte des troisièmes moyens permettant, en fonction des informations de cartographie de réception d'émettre un signal fonction de ladite cartographie permettant d'améliorer la qualité de réception dans sa sous-zone de réception.

2. Réseau selon la revendication 1, **caractérisé en ce que** les informations de cartographique sont de deux types, des informations de qualité de réception dues à la topographie des sous-zones et des informations de qualité de réception dues aux conditions météorologiques.

3. Réseau selon la revendication 1, **caractérisé en ce que** la qualité de réception dans chaque sous-zone comporte au moins trois niveaux distincts :
• Premier niveau : réception satellitaire correcte des terminaux de réception ;
• Second niveau : réception satellitaire partielle ou fluctuante des terminaux de réception ;
• Troisième niveau : réception satellitaire incorrecte des tereminaux de réception.

4. Réseau selon la revendication 1, **caractérisé en ce que** le réseau comporte des quatrièmes moyens de contrôle du signal d'émission de la station-relais terrestre.

5. Réseau selon la revendication 1, **caractérisé en ce que** la station-relais comporte des cinquièmes moyens permettant de recevoir des informations des terminaux de réception mobiles.

6. Réseau selon la revendication 5, **caractérisé en ce que** les informations reçues des terminaux concernent la qualité de réception par lesdits terminaux.

7. Réseau selon la revendication 1, **caractérisé en ce que** le signal émis par la station est un signal d'interférence destructeur du signal satellitaire ou un signal d'interférence bruité pour éviter la réception correcte dans certaines sous-zones interdites.

8. Réseau selon la revendication 1, **caractérisé en ce que** l'emplacement de la station-relais terrestre est déterminé en fonction de la cartographie de la qualité de réception du signal satellitaire, l'emplacement pouvant être définitif ou temporaire.
